# EUROPEAN PATENT APPLICATION

(11) **EP 4 678 382 A1**
(43) Date of publication of application: **14.01.2026**
(21) Application number: 24766917.9
(22) Date of filing: 26.02.2024
(51) Int. Cl.: B29C 65/62

(54) **JOINT MEMBER AND METHOD FOR MANUFACTURING JOINT MEMBER**

(30) Priority: 07.03.2023 JP 2023034790
(71) Applicant: Mitsubishi Heavy Industries, Ltd., Tokyo 100-8332 (JP)
(72) Inventor: KAMO, Sota, Tokyo 100-8332 (JP); YAMADA, Yuki, Tokyo 100-8332 (JP); ANDO, Koji, Tokyo 100-8332 (JP)
(74) Representative: Hoffmann Eitle
(86) International application number: PCT/JP2024/006694
(87) International publication number: WO 2024/185546

(57) **Abstract**

This joint member comprises a first member (30), a second member (20), and a third member (40). The first member and the second member are joined via the third member. A plurality of connection holes are provided in a joint surface of the first member. The connection holes are for connecting two different portions on the joint surface with each other via an inner space of the first member. The joint surface of the first member is a surface of the first member that faces the second member. The second member comprises a resin. The third member comprises a resin member and a fiber member. The fiber member is a member that is inserted into the connection hole and extends from one to the other of the two portions. The connection surface is in contact with the resin containing the fiber member.

## Description

### Technical Field

The present disclosure relates to a joint member and a method for manufacturing a joint member.

### Background Art

For example, PTL 1 below describes a plate-like composite material (joint member) where a long fiber-reinforced plastic plate and a metal plate are integrated through an adhesive agent.

### Citation List

### Patent Literature

[PTL 1] Japanese Patent No. 4964855

### Summary of Invention

### Technical Problem

In the above-described case, when foreign matter is mixed between a metal plate and an adhesive agent, there is a concern that a joint strength may be insufficient. In addition, there is a concern that the joint strength may be insufficient due to a difference in linear expansion coefficient caused by a difference in material between the metal plate and the adhesive agent.

### Solution to Problem

According to one aspect of the present disclosure, a joint member is provided. The joint member includes a first member, a second member, and a third member. The first member and the second member are joined through the third member. A plurality of connection holes are provided in a joint surface of the first member. The connection holes are holes for connecting two different locations in the joint surface through an internal space of the first member. The joint surface of the first member is a surface of the first member facing the second member. The second member contains a resin. The third member contains a resin member and a fiber member. The fiber member is a member that is inserted into the connection holes and extends from one location to another location among the two locations. A resin containing the fiber member is in contact with the joint surface.

According to another aspect of the present disclosure, a method for manufacturing a joint member is provided. The method for manufacturing a joint member, includes: a step of forming a first member where a plurality of connection holes are formed; an insertion step of inserting a third member through the connection holes from one opening into another opening in two different openings among openings formed in a joint surface of the first member by the connection holes; and a joining step of interposing the third member between the first member and a second member to join the third member and the second member to each other. The second member contains a resin. The third member contains a resin member and a fiber member. The insertion step is a step of inserting the fiber member into the connection holes. The joining step is a step of joining the second member to the resin member of the third member.

### Brief Description of Drawings

Fig. 1 is a cross-sectional view illustrating a cross-sectional configuration of a joint member according to a first embodiment.
Fig. 2 is a plan view illustrating the joint member according to the first embodiment.
Fig. 3 is a flowchart illustrating manufacturing steps of the joint member according to the first embodiment.
Fig. 4A is a cross-sectional view illustrating a manufacturing step of the joint member according to the first embodiment.
Fig. 4B is a cross-sectional view illustrating a manufacturing step of the joint member according to the first embodiment.
Fig. 4C is a cross-sectional view illustrating a manufacturing step of the joint member according to the first embodiment.
Fig. 5 is a flowchart illustrating manufacturing steps of a joint member according to a second embodiment.
Fig. 6 is a plan view illustrating a joint member according to a third embodiment.
Fig. 7 is a cross-sectional view illustrating a part of manufacturing steps of the joint member according to the third embodiment.
Fig. 8 is a plan view illustrating a joint member according to a fourth embodiment.
Fig. 9 is a cross-sectional view illustrating a cross-sectional configuration of a joint member according to a fifth embodiment.
Fig. 10 is a cross-sectional view illustrating a cross-sectional configuration of a joint member according to a sixth embodiment.
Fig. 11 is a cross-sectional view illustrating a problem to be solved by a seventh embodiment.
Fig. 12 is a cross-sectional view illustrating a part of manufacturing steps of the joint member according to the seventh embodiment.
Fig. 13 is a cross-sectional view illustrating a part of manufacturing steps of a joint member according to an eighth embodiment.

### Description of Embodiments

### <First Embodiment>

Hereinafter, a first embodiment will be described with reference to the drawings.

### "Configuration of Joint Member"

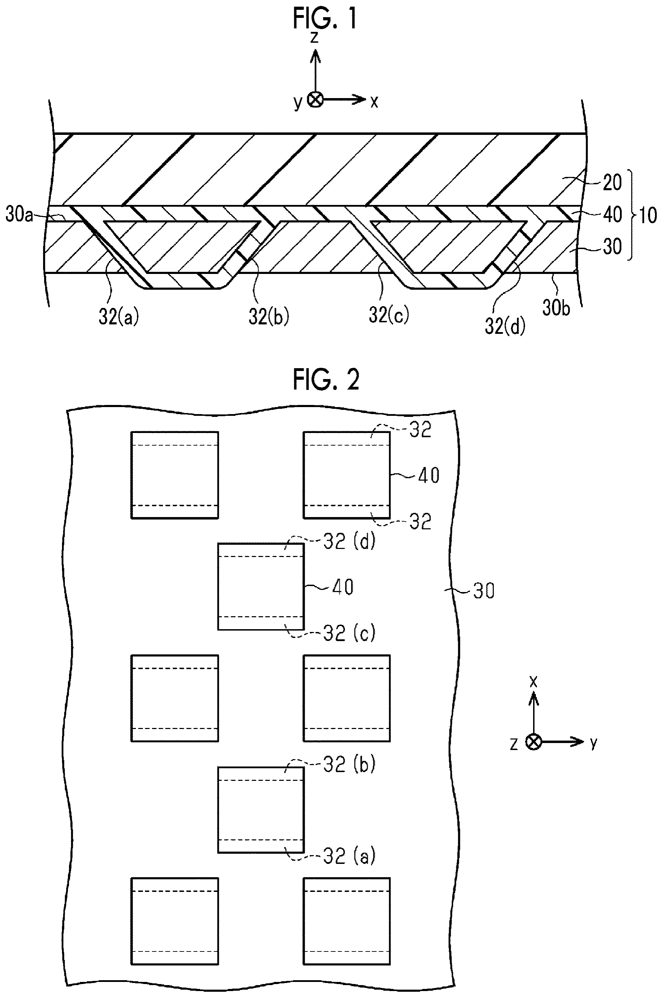

Fig. 1 illustrates a cross-sectional configuration of a joint member 10. The joint member 10 may be, for example, a member forming a body of a vehicle. In particular, the joint member 10 may be a member forming a body of an aircraft, such as an airframe of an aircraft, a fuselage of an aircraft, or a wing of an aircraft.

As illustrated in Fig. 1, the joint member 10 includes a reinforced fiber plastic member 20, a metal member 30, and a member for joining 40.

The reinforced fiber plastic member 20 is formed of, for example, a carbon fiber reinforced thermoplastic resin (CFRTP). The metal member 30 is formed of, for example, titanium. The member for joining 40 is a member for joining the reinforced fiber plastic member 20 and the metal member 30. In other words, the member for joining 40 is a member for joining members formed of different materials. The member for joining 40 is formed of, for example, CFRTP.

**In** Fig. 1, a direction in which the metal member 30 and the reinforced fiber plastic member 20 are laminated is a z-axis direction. Directions orthogonal to the z-axis direction are an x-axis direction and a y-axis direction. In the joint member 10 illustrated in Fig. 1, for example, the metal member 30 and the reinforced fiber plastic member 20 are plate-like members parallel to a plane spanned by the x-axis and the y-axis.

A plurality of connection holes 32 are provided in the metal member 30. In Fig. 1, in order to distinguish between the plurality of connection holes 32, "32(a), 32(b), 32(c), and 32(d)" are shown. Alphabets in parentheses are label variables for differentiating the connection holes 32.

The plurality of connection holes 32 penetrate a joint surface 30a and a back surface 30b in the metal member 30. The joint surface 30a in the metal member 30 is a surface facing the member for joining 40. The back surface 30b is a back surface of the joint surface 30a in the metal member 30. The connection holes 32 are formed obliquely to the z-axis. In other words, the connection holes 32 are formed obliquely in a thickness direction of the metal member 30.

The member for joining 40 includes a portion interposed between the reinforced fiber plastic member 20 and the metal member 30 and a portion filled in the connection holes 32. In the member for joining 40, a portion filled in one connection hole 32 is connected to a portion filled in another connection hole 32 adjacent thereto through the back surface 30b of the metal member 30. That is, when a first hole and a second hole adjacent to each other among the connection holes 32 are the connection holes 32(a) and 32(b), respectively, portions of the member for joining 40 exposed from the back surface of the metal member 30 through the connection holes 32(a) and 32(b) are connected to each other. A distance between an inlet and an outlet of the connection holes 32(a) and 32(b) on the back surface 30b side is less than that on the joint surface 30a side. As a result, as illustrated in Fig. 1, a cross-sectional shape on an xz plane of the member for joining 40 has a trapezoidal portion or an arch-shaped portion.

Likewise, portions of the member for joining 40 exposed from the back surface of the metal member 30 through the connection holes 32(c) and 32(d) are connected to each other. A distance between an inlet and an outlet of the connection holes 32(c) and 32(d) on the back surface 30b side is less than that on the joint surface 30a side.

Fig. 2 is a plan view illustrating the metal member 30 when seen from the back surface 30b side. As illustrated in Fig. 2, the member for joining 40 is intermittently exposed from the back surface 30b of the metal member 30 through the connection holes 32. The member for joining 40 connects one connection hole 32 and another connection hole 32 to each other in each pair of two adjacent connection holes 32 among the connection holes 32 formed along the x-axis direction. That is, the member for joining 40 connects the two adjacent connection holes 32(a) and 32(b) in the back surface 30b. In addition, the member for joining 40 connects the two adjacent connection holes 32(c) and 32(d) in the back surface 30b. On the other hand, the member for joining 40 is not disposed between the two adjacent connection holes 32(b) and 32(c) in the back surface 30b. A carbon fiber in the member for joining 40 extends along the x-axis while meandering by alternately passing between the joint surface 30a and the back surface 30b.

### "Manufacturing Steps of Joint Member"

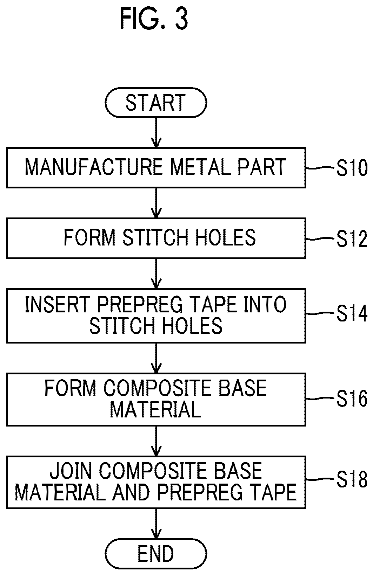

Fig. 3 illustrates manufacturing steps of the joint member 10.

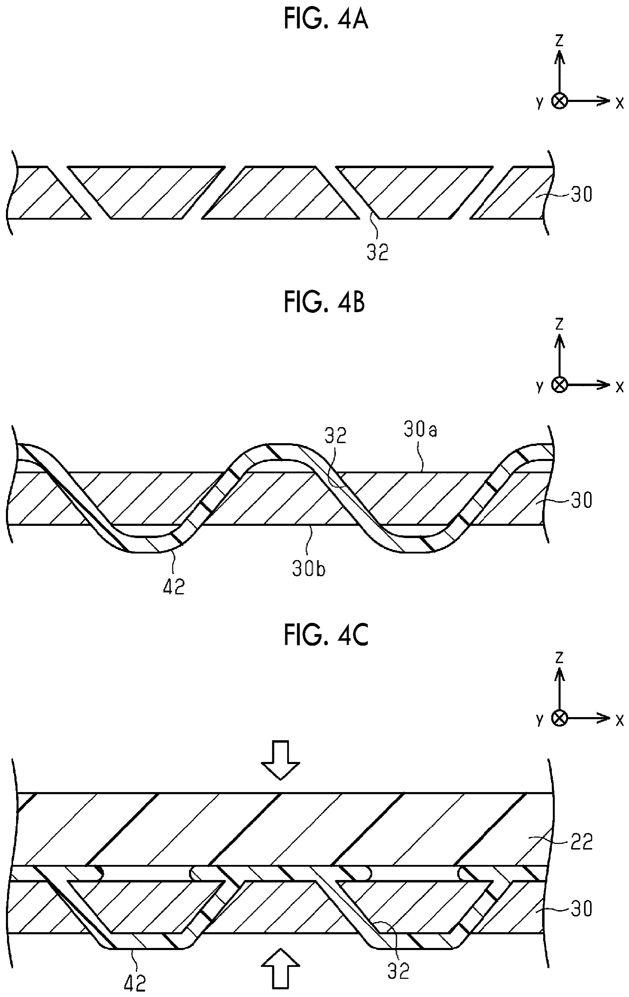

In a series of steps illustrated in Fig. 3, first, a metal part that is an original form of the metal member 30 is manufactured (S10). That is, a metallic material is molded into a metal part having a predetermined shape and a predetermined dimension. Next, by forming stitch holes (connection holes 32) in the metal part, the metal member 30 is manufactured (S12). Fig. 4A illustrates a cross-sectional structure of the metal member 30 formed in the step S12.

Referring back to Fig. 3, a prepreg tape that is a material of the member for joining 40 is inserted into the stitch holes (S14). Fig. 4B illustrates the step S14. As illustrated in the drawing, a prepreg tape 42 is disposed to meander and extend in the x-axis direction while reciprocating between the joint surface 30a and the back surface 30b of the metal member 30 through the connection holes 32. It is preferable that the carbon fiber in the prepreg tape 42 is a unidirectional material and is aligned in the x-axis direction and disposed to meander.

Referring back to Fig. 3, a composite base material that is an original form of the reinforced fiber plastic member 20 is formed (S16). The composite base material and the prepreg tape are joined (S18). Fig. 4C illustrates the step S18. As illustrated in Fig. 4, the composite base material 22 is disposed on the joint surface 30a side of the metal member 30, and a pressure is applied to both of a back surface of a surface of the composite base material 22 facing the joint surface 30a and the back surface 30b of the metal member 30. At this time, heat is applied. Here, the prepreg tape 42 is heated such that a temperature of the prepreg tape 42 is a temperature at which the prepreg tape 42 is softened to be easily deformed. A device used for heating may be a device that emits infrared light. In addition, the device used for heating may be a device that emits ultrasonic waves. In addition, the device used for heating may be a soldering iron.

In the step S18, a resin component in the prepreg tape 42 is spread thin to be embedded in a gap between the metal member 30 and the composite base material 22. As a result, the resin component in the prepreg tape 42 is joined to the composite base material 22. In addition, the resin component in the prepreg tape 42 is joined to the metal member 30. As a result, the composite base material 22 and the metal member 30 are joined through the resin component in the prepreg tape 42. **In** addition, the composite base material 22 is finally transformed into the reinforced fiber plastic member 20 through this step.

### "Actions and Effects of Present Embodiment"

The joint member 10 is a member where the reinforced fiber plastic member 20 and the metal member 30 formed of two different materials are joined. The metal member 30 penetrates the joint surface 30a and the back surface 30b through the plurality of connection holes 32. The carbon fiber of the member for joining 40 extends along a fixed direction of the metal member 30 through the connection holes 32 while meandering between the joint surface 30a and the back surface 30b. In addition, a resin of the member for joining 40 is joined to the reinforced fiber plastic member 20.

Here, the reinforced fiber plastic member 20 and the member for joining 40 are formed of the same material. Therefore, a difference in linear expansion coefficient or the like between the reinforced fiber plastic member 20 and the member for joining 40 is less than a difference in linear expansion coefficient between the reinforced fiber plastic member 20 and the metal member 30. Therefore, a joint strength when the reinforced fiber plastic member 20 and the member for joining 40 are directly joined is higher than a joint strength when the reinforced fiber plastic member 20 and the metal member 30 are directly joined. In addition, the joint strength when the reinforced fiber plastic member 20 and the member for joining 40 are directly joined is higher than a joint strength when the member for joining 40 and the metal member 30 are directly joined. This way, the joint strength between the reinforced fiber plastic member 20 and the member for joining 40 is high. Therefore, it is considered that the reinforced fiber plastic member 20 and the carbon fiber of the member for joining 40 are inseparably integrated. Therefore, it is considered that the reinforced fiber plastic member 20 and the metal member 30 are stitched together by the carbon fiber of the member for joining 40. Therefore, even when a force acts to separate the reinforced fiber plastic member 20 and the metal member 30, the carbon fiber can sufficiently withstand the force. Accordingly, the reinforced fiber plastic member 20 and the metal member 30 can be more strongly joined as compared to when the reinforced fiber plastic member 20 and the metal member 30 are directly joined.

With the above-described present embodiment, the following actions and effects can be obtained.
(1) The connection holes 32 are formed obliquely to the z-axis. Regarding the two connection holes that are connected through the carbon fiber on the back surface 30b side among the pairs of the two adjacent connection holes 32, a distance between the connection holes 32 on the back surface 30b side is set to be less than a distance between the connection holes 32 on the joint surface 30a side. Regarding the two connection holes that are not connected through the carbon fiber on the back surface 30b side among the pairs of the two adjacent connection holes 32, a distance between the connection holes 32 on the joint surface 30a side is set to be less than a distance between the connection holes 32 on the back surface 30b side. As a result, it is easy to insert the carbon fiber into the plurality of connection holes 32 along a fixed direction. Further, a force to be applied to a connecting portion between the member for joining 40 filled in the connection holes 32 and the joint member exposed on the back surface 30b side of the metal member 30 can be reduced. In addition, a force to be applied to a connecting portion between the member for joining 40 filled in the connection holes 32 and the joint member exposed on the joint surface 30a side of the metal member 30 can be reduced.

### <Second Embodiment>

Hereinafter, regarding a second embodiment, differences from the first embodiment will be mainly described with reference to the drawings.

In the present embodiment, the reinforced fiber plastic member 20 is a composite material of a thermosetting resin and a carbon fiber.

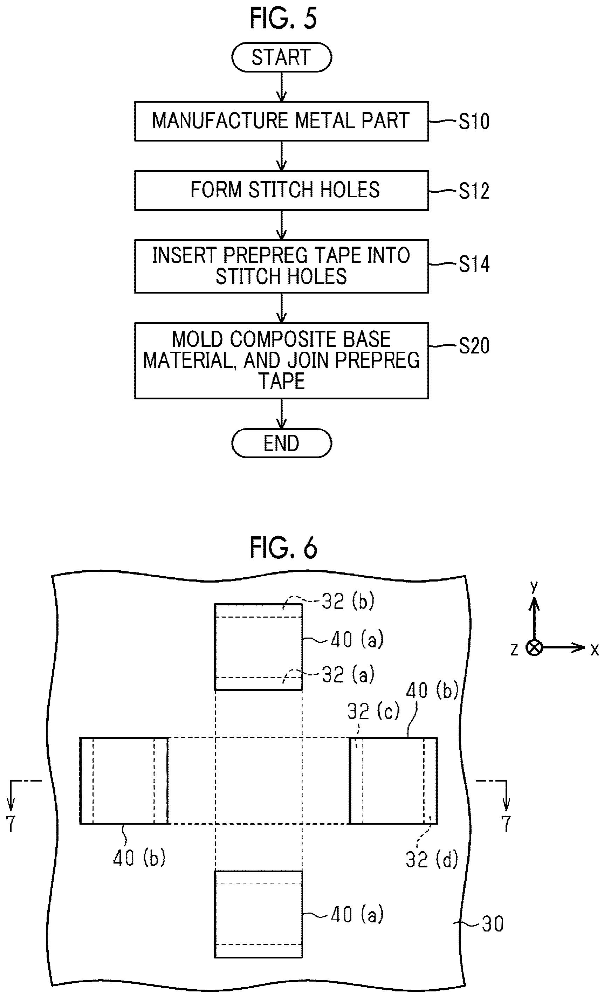

Fig. 5 illustrates manufacturing steps of the joint member 10 according to the present embodiment. In Fig. 5, steps corresponding to the steps illustrated in Fig. 3 will be represented by the same step numbers for convenience of description.

In a series of processes illustrated in Fig. 5, after the step S14, the molding of the composite base material 22 and the joining of the reinforced fiber plastic member 20 that is formed by molding and the member for joining 40 joined to the metal member 30 are performed (S20). This way, by molding the reinforced fiber plastic member 20 and the member for joining 40 together, even when the reinforced fiber plastic member 20 is a composite material of a thermosetting resin and a carbon fiber, the reinforced fiber plastic member 20 and the member for joining 40 can be joined without using an adhesive agent. In addition, in this step, the molding step of the composite base material 22 and the joining step of the metal member 30 can be performed simultaneously.

### <Third Embodiment>

Hereinafter, regarding a third embodiment, differences from the first embodiment will be mainly described with reference to the drawings.

Fig. 6 is a diagram illustrating the joint member 10 according to the present embodiment when seen from the metal member 30 side. As illustrated in Fig. 6, in the present embodiment, a member for joining 40(a) where the carbon fiber extends along the y-axis direction and a member for joining 40(b) where the carbon fiber extends along the x-axis direction are provided. That is, the member for joining 40(a) where the carbon fiber extends along the y-axis direction includes the carbon fiber extending from one connection hole to another connection hole among the two connection holes 32(a) and 32(b) adjacent to each other in the y-axis direction. In addition, the member for joining 40(b) where the carbon fiber extends along the x-axis direction includes the carbon fiber extending from one connection hole to another connection hole among the two connection holes 32(c) and 32(d) adjacent to each other in the x-axis direction.

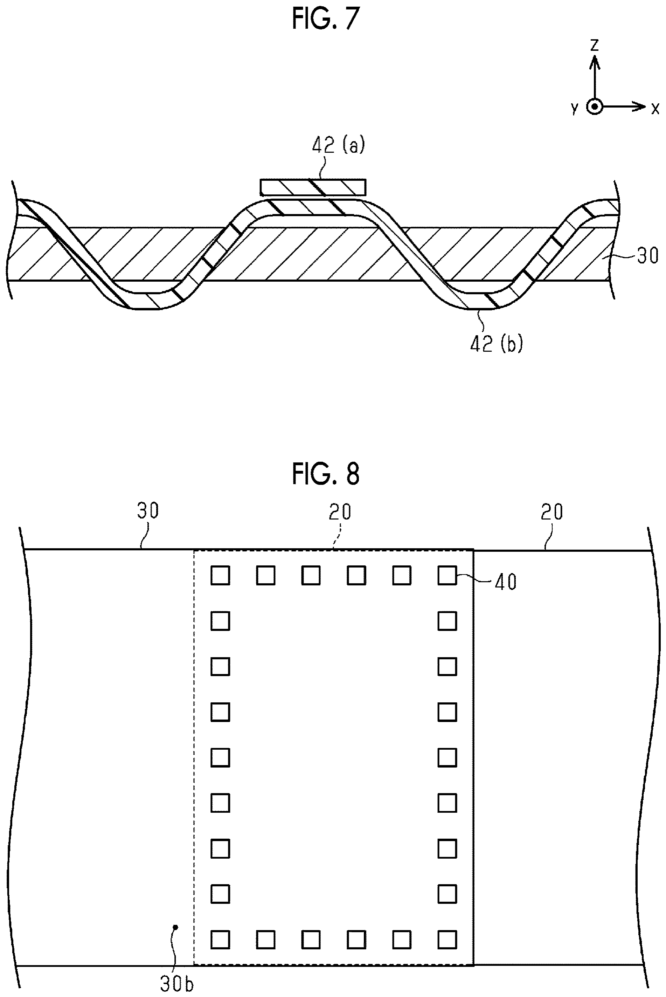

Fig. 7 illustrates a 7-7 cross-section of Fig. 6 in the step S14.

Fig. 7 illustrates an example where, after allowing a prepreg tape 42(b) that functions as the member for joining 40(b) where the carbon fiber extends in the x-axis direction to pass through the connection holes 32, a prepreg tape 42(a) that functions as the member for joining 40(a) where the carbon fiber extends in the y-axis direction is allowed to pass through the connection holes 32.

In this configuration, the reinforced fiber plastic member 20 and the metal member 30 are stitched together along two directions orthogonal to each other by the carbon fiber of the member for joining 40. Therefore, even when a force is applied to the reinforced fiber plastic member 20 and the metal member 30 from various directions, the joined state can be more reliably maintained.

### <Fourth Embodiment>

Hereinafter, regarding a fourth embodiment, differences from the first embodiment will be mainly described with reference to the drawings.

Fig. 8 is a diagram illustrating the joint member 10 according to the present embodiment when seen from the metal member 30 side. As illustrated in Fig. 8, in the present embodiment, in a region where the reinforced fiber plastic member 20 and the metal member 30 face each other, a density at which the member for joining 40 is exposed on the back surface 30b side of the metal member 30 varies depending on regions. Specifically, the member for joining 40 is exposed on the back surface 30b side of the metal member 30 along an edge portion of the region where the reinforced fiber plastic member 20 and the metal member 30 face each other. In other words, a region where the reinforced fiber plastic member 20 and the metal member 30 are stitched together by the member for joining 40 is provided along the edge portion of the region where the reinforced fiber plastic member 20 and the metal member 30 face each other.

As a result, the reinforced fiber plastic member 20 and the metal member 30 can be stitched together by the member for joining 40 using a region that is particularly effective for joining the reinforced fiber plastic member 20 and the metal member 30. Therefore, the reinforced fiber plastic member 20 and the metal member 30 can be efficiently stitched together.

### <Fifth Embodiment>

Hereinafter, regarding a fifth embodiment, differences from the first embodiment will be mainly described with reference to the drawings.

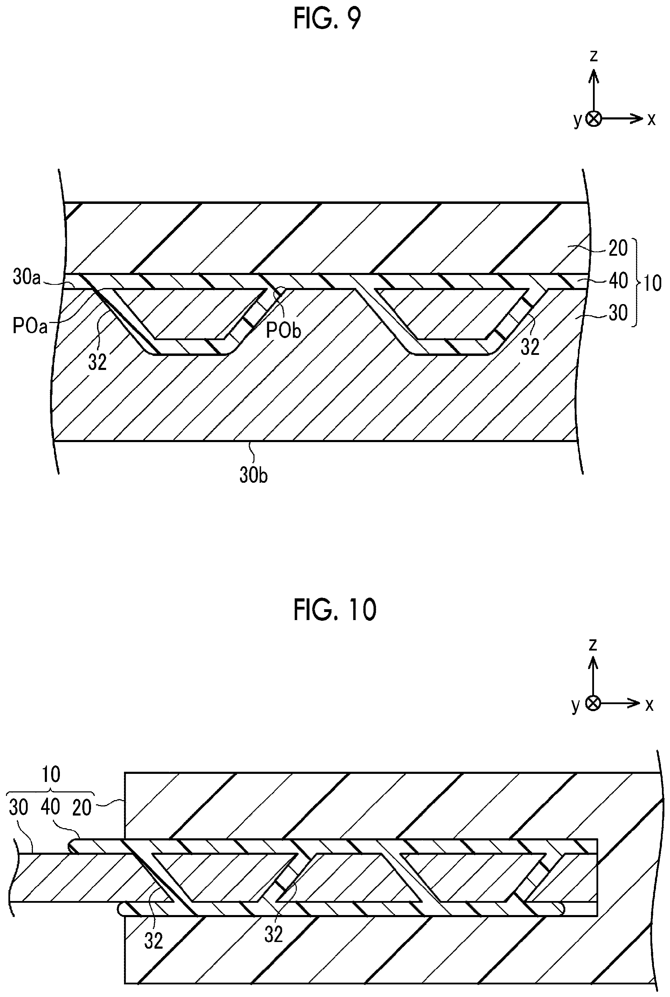

Fig. 9 illustrates a cross-sectional configuration of the joint member 10 according to the present embodiment. The connection holes 32 of the metal member 30 according to the present embodiment are not holes that penetrate the joint surface 30a and the back surface 30b. The connection holes 32 penetrate two different openings of the joint surface 30a. That is, the connection holes 32 penetrate, for example, a pair of openings POa and POb adjacent to each other in the x-axis direction. The connection holes 32 are filled with the member for joining 40. Specifically, the carbon fiber of the member for joining 40 extends along the connection holes 32. In the example illustrated in Fig. 9, the carbon fiber of the member for joining 40 extends in the x-axis direction while meandering through the plurality of connection holes 32.

Even in this configuration, the reinforced fiber plastic member 20 and the metal member 30 can be stitched together by the carbon fiber of the member for joining 40.

### <Sixth Embodiment>

Hereinafter, regarding a sixth embodiment, differences from the first embodiment will be mainly described with reference to the drawings.

Fig. 10 illustrates a cross-sectional configuration of the joint member 10 according to the present embodiment. In the present embodiment, both surfaces of the metal member 30 orthogonal to the z-axis are joint surfaces. That is, both of the above-described surfaces of the metal member 30 face the reinforced fiber plastic member 20 through the member for joining 40.

In the metal member 30, the plurality of connection holes 32 are formed along the x-axis direction. All of the connection holes 32 penetrate the metal member 30. In addition, the connection holes 32 are formed obliquely to the z-axis. The connection holes 32 are filled with the member for joining 40. Specifically, the carbon fiber of the member for joining 40 extends in the x-axis direction while meandering through the connection holes 32.

With this configuration, each of the two surfaces of the metal member 30 is stitched to the reinforced fiber plastic member 20 by the carbon fiber of the member for joining 40.

### <Seventh Embodiment>

Hereinafter, regarding a seventh embodiment, differences from the first embodiment will be mainly described with reference to the drawings.

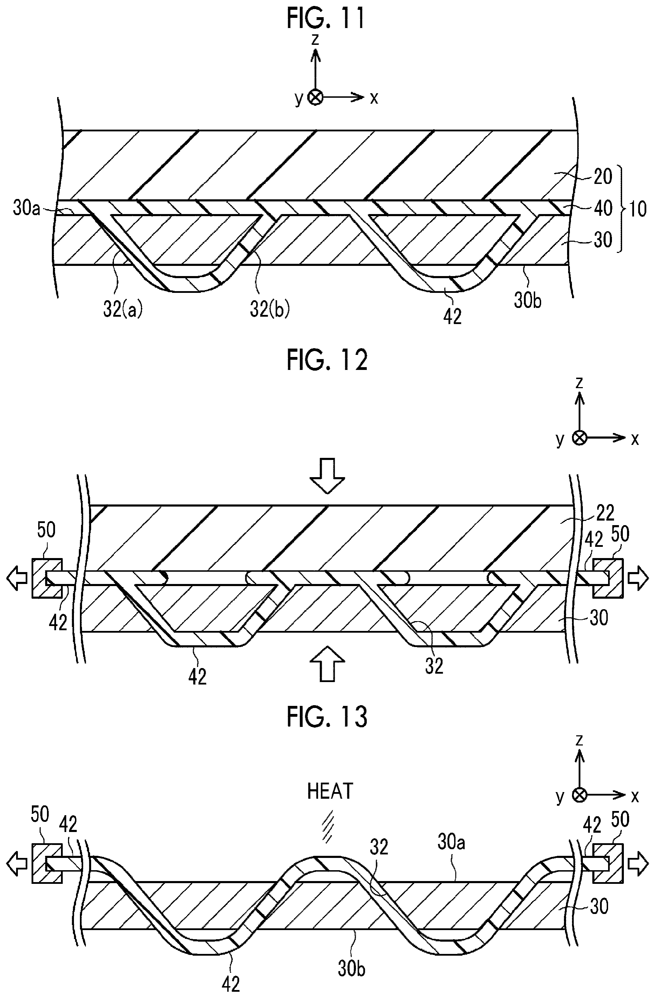

Fig. 11 illustrates an example where the member for joining 40 cannot be sufficiently brought into contact with the back surface 30b of the metal member 30 in the above-described step S18. Fig. 11 is a cross-sectional view corresponding to Fig. 1. In this state, there is a concern that a joint strength between the metal member 30 and the reinforced fiber plastic member 20 may decrease.

Accordingly, in the present embodiment, the step S18 is set such that a process described below is performed.

Fig. 12 illustrates the step S18 in the present embodiment. As illustrated in Fig. 12, in the present embodiment, both end portions of the prepreg tape 42 are grasped with clips 50 and stretched in opposite directions. In Fig. 12, the directions in which the tensions of both of the ends of the prepreg tape 42 act are indicated by white arrows. These directions are opposite directions of the x-axis.

As a result, formation of a gap between the member for joining 40 and the back surface 30b of the metal member 30 can be suppressed.

### <Eighth Embodiment>

Hereinafter, regarding an eighth embodiment, differences from the seventh embodiment will be mainly described with reference to the drawings.

In the present embodiment, in the step S14, the prepreg tape 42 and the back surface 30b of the metal member 30 are adhered to each other.

Fig. 13 illustrates the step S14 in the present embodiment. As illustrated in Fig. 13, in the present embodiment, both end portions of the prepreg tape 42 are grasped with clips 50 and stretched in opposite directions. In Fig. 13, the directions in which the tensions of both of the ends of the prepreg tape 42 act are indicated by white arrows. These directions are opposite directions of the x-axis. Further, the prepreg tape 42 is heated such that the prepreg tape 42 is softened. A device used for heating may be a device that emits infrared light. In addition, the device used for heating may be a device that emits ultrasonic waves. In addition, the device used for heating may be a soldering iron.

As a result, in the step S14, the prepreg tape 42 is adhered to the back surface 30b of the metal member 30.

### <Correspondence>

Correspondences between the features in the above-described embodiments and features described in the column "Supplementary Note" below are as follows. Hereinafter, a correspondence will be shown for each of numbers of solutions described in the column "Supplementary Note".
[1] The first member corresponds to the metal member 30. The second member corresponds to the reinforced fiber plastic member 20. The third member corresponds to the member for joining 40. "The two different locations in the joint surface" correspond to the opening of the joint surface 30a side by the connection hole 32(a) and the opening of the joint surface 30a side by the connection hole 32(b) in the metal member 30 illustrated in Fig. 1.
[2] The feature described in Solution 2 corresponds to the feature that the member for joining 40 is a composite material of a resin member and a fiber member.
[3] The feature described in Solution 3 corresponds to the feature that the reinforced fiber plastic member 20 is a composite material containing a carbon fiber.
[4] The metal member 30 corresponds to a member formed of titanium.
[5] A direction orthogonal to a joint surface corresponds to a z direction of Fig. 1. The connection holes being formed obliquely corresponds to the connection holes 32 being inclined in an x direction with respect to the z direction.
[6] The first hole corresponds to the connection hole 32(a). The second hole corresponds to the connection hole 32(b).
[7] The feature described in Solution 7 corresponds to Fig. 9.
[8] The feature described in Solution 8 corresponds to Fig. 10.
[9] The first direction connection hole corresponds to the connection holes 32(a) and 32(b). The second direction connection hole corresponds to the connection holes 32(c) and 32(d). The first location corresponds to the opening of the metal member 30 by the connection hole 32(a). The second location corresponds to the opening of the metal member 30 by the connection hole 32(b). The third location corresponds to the opening of the metal member 30 by the connection hole 32(c). The fourth location corresponds to the opening of the metal member 30 by the connection hole 32(d).
[10] The feature described in Solution 10 corresponds to the configuration illustrated in Fig. 8. That is, in Fig. 8, a density at which the connection holes into which the fiber member is inserted are formed on the joint surface (ratio of the area of the openings of the connection holes to the unit area of the joint surface) corresponds to a relationship defined by Solution 10.
[11] The step of forming the first member corresponds to the steps S10 and S12. The insertion step corresponds to the step S14. The joining step corresponds to the steps S18 and S20.
[12] The joining step corresponds to the step illustrated in Fig. 12.
[13] The insertion step corresponds to the step illustrated in Fig. 13.

### <Other Embodiments>

The present embodiment can be implemented by being changed as follows. The present embodiment and the following change examples can be implemented by being combined with each other within a range where there is no technical contradiction.

### "Regarding Metal Member 30"

· The metal member 30 is not limited to a member formed of titanium. The metal member 30 may be formed of, for example, stainless steel. In addition, the metal member 30 may be formed of, for example, an aluminum alloy. In addition, the metal member 30 may be formed of, for example, copper or an alloy containing copper.

### "Regarding First Member"

· The first member does not need to be the metal member 30. For example, the first member may be a member formed of a ceramic. In addition, the first member may be formed of a resin.

### "Regarding Second Member"

· The composite material containing a resin as the second member does not need to be the reinforced fiber plastic member 20. For example, the composite material does not need to contain a fiber.

· The second member does not need to be a composite material containing a resin. For example, the second member may be formed of only a resin.

### "Regarding Third Member"

· The inorganic fiber in the third member does not need to be the carbon fiber. For example, the inorganic fiber may be a graphite fiber, a silicon carbide fiber, an alumina fiber, a boron fiber, or a glass fiber. In addition, the fiber member in the second member does not also need to be formed of an inorganic fiber. For example, the fiber member may be formed of an organic fiber such as an aramid fiber or a polyethylene fiber.
· The resin member in the third member does not need to be a thermosetting resin. For example, the resin member may be a thermoplastic resin.
· The third member does not need to be the composite material of the fiber member and the resin member. For example, a portion filled in the connection holes 32, a portion exposed on the back surface 30b, and a portion formed of only the fiber member and interposed between the reinforced fiber plastic member 20 and the metal member 30 may be the composite material of the fiber member and the resin member.
· The third member does not need to contain the resin member. For example, when the reinforced fiber plastic member 20 is formed of a thermoplastic resin or the like and the metal member 30 and the composite base material 22 are joined, the fiber member of the third member may be covered with a fluidized resin of the surface of the composite base material 22. In this case, the fiber member interposed between the reinforced fiber plastic member 20 and the metal member 30 in the joint member 10 is a composite material that is inseparably integrated with a resin.

### "Regarding Sewing up of Reinforced Fiber Plastic Member 20 and Metal Member 30"

· For example, one common prepreg tape 42 does not need to be inserted into all of the connection holes 32 of one line along a sewing direction such as the x-axis direction illustrated in Fig. 1. For example, when the connection holes 32 of one line along the sewing direction are represented by numbers such as 1, 2, 3, and ..., prepreg tapes 42 for the even-numbered connection holes 32 and prepreg tapes 42 for the odd-numbered connection holes 32 may be separately prepared.
· One prepreg tape 42 does not need to be inserted into three or more connection holes 32. For example, in Fig. 1, the prepreg tape 42 may reciprocate between the joint surface 30a and the back surface 30b of the metal member 30 through two connection holes 32 adjacent to each other. In this case, when the number of the connection holes 32 along the x-axis direction is an even number N, "N/2" prepreg tapes 42 are used for the connection holes 32.
· One prepreg tape 42 does not need to be inserted into one connection hole 32.

### "Regarding Direction in which Carbon Fiber Extends"

· The direction in which the carbon fiber of the member for joining 40 extends is not limited to one direction or two directions orthogonal to each other as illustrated in Fig. 6. The direction in which the carbon fiber of the member for joining 40 extends may be, for example, two directions obliquely intersecting each other. In addition, the direction in which the carbon fiber of the member for joining 40 extends may be three or more different directions.

### "Regarding Connection Holes"

· The connection holes 32 do not need to be inclined with respect to the z-axis direction.

### "Regarding Manufacturing Steps of Joint Member"

· When the reinforced fiber plastic member 20 is formed of a composite material of a thermosetting resin and a carbon fiber, the steps of Fig. 3 may be adopted. Note that, in this case, it is desirable that the composite base material 22 and the prepreg tape 42 are joined using an adhesive agent.
· When the reinforced fiber plastic member 20 is formed of a composite material of a thermoplastic resin and a carbon fiber, the steps of Fig. 5 may be adopted.

### <Supplementary Notes>

Solution 1: A joint member includes a first member, a second member, and a third member, in which the first member and the second member are joined through the third member, a plurality of connection holes are provided in a joint surface of the first member, the connection holes are holes for connecting two different locations in the joint surface through an internal space of the first member, the joint surface of the first member is a surface of the first member facing the second member, the second member contains a resin, the third member contains a resin member and a fiber member, the fiber member is a member that is inserted into the connection holes and extends from one location to another location among the two locations, and a resin containing the fiber member is in contact with the joint surface.

With the above-described configuration, by inserting the fiber member of the third member into the joining holes of the first member, the first member and the third member can be strongly connected to each other. The first member and the second member are joined through the third member. On the other hand, the resin containing the fiber member is in contact with the joint surface of the first member, and the second member contains a resin. Therefore, the third member is joined to the second member through the resin containing the fiber member. Therefore, the third member joined to the second member has a good affinity during joining to the second member. Therefore, even when it is difficult to strongly join the first member and the second member, a joint strength between the first member and the second member can be increased.

Further, even when the first member and the third member are peeled off from each other due to a force applied in the normal direction of the joint surface, the complete separation of the first member and the second member is sufficiently suppressed by the fiber member inserted into the joining holes.

Solution 2. In the composite member according to Solution 1, in the third member, both of a portion inserted into the connection holes and a portion in contact with the joint surface are formed of a composite material containing the resin member and the fiber member, and the second member is joined to the resin member of the third member.

In the above-described configuration, the third member is a composite material of the resin member and the fiber member. As a result, the formation of the third member is easier as compared to when a portion of only the fiber member is partially provided.

Solution 3. In the joint member according to Solution 1 or 2, the second member is a composite material containing a fiber and a resin.

In the above-described configuration, by forming the second member using the composite material containing a fiber and a resin, the strength of the second member can be further increased as compared to when the second member is formed of only a resin.

Solution 4. In the joint member according to Solution 1, the first member is a metal member.

In the above-described configuration, the first member is a metal member. Therefore, when the first member and the second member are joined using an adhesive agent or the like, it is difficult to increase the joint strength. Therefore, the utility value of the above-described method for inserting the third member into the connection holes is particularly high.

Solution 5. In the joint member according to Solution 1, the connection holes are formed obliquely to a direction orthogonal to the joint surface between the first member and the second member.

When the connection holes are orthogonal to the joint surface, it is difficult to extend the fiber member from one location to another location among the two locations of the joint surface through the joining holes. In addition, a force to be applied to the fiber member in the openings of the joint surface by the connection holes is likely to increase. Accordingly, in the above-described configuration, the connection holes are formed obliquely to the direction orthogonal to the joint surface. As a result, the above-described problem can be alleviated.

Solution 6. In the joint member according to any one of Solutions 1 to 5, the connection holes that connect the two locations include a first hole and a second hole, the first hole is a hole that is provided in one location among the two locations and penetrates the joint surface of the first member and a back surface of the joint surface, the second hole is a hole that is provided in another location among the two locations and penetrates the joint surface of the first member and the back surface of the joint surface, and the fiber member is disposed to extend from one hole to another hole among two holes including the first hole and the second hole across the facing surface.

In the above-described configuration, the fiber member is connected to the joint surface across the back surface of the joint surface through the first hole and the second hole. Therefore, when the first member is separated from the second member, the fiber member applies a force to the above-described back surface. As a result, the separation of the first member from the second member can be suppressed.

Solution 7. In the joint member according to any one of Solutions 1 to 5, the connection holes that connect the two locations are holes that connect the two locations through the internal space of the first member without penetrating a back surface of the joint surface.

In the above-described configuration, the fiber member extends from one location to another location among the two different locations of the joint surface through the internal space of the first member. Therefore, when the first member is separated from the second member, the fiber member applies a force to an inner wall of the connection holes. As a result, the separation of the first member from the second member can be suppressed.

Solution 8. In the joint member according to Solution 6, the back surface of the joint surface of the first member with the second member is also a joint surface with the second member.

In the above-described configuration, the first member and the second member can be joined such that both of the surfaces of the first member are interposed in the second member.

Solution 9. In the joint member according to any one of Solutions 1 to 8, the connection holes include a first direction connection hole and a second direction connection hole, the first direction connection hole is a hole for connecting a first location and a second location that are different from each other in the joint surface of the first member, the second direction connection hole is a hole for connecting a third location and a fourth location that are different from each other in the joint surface of the first member, and a direction extending from one location to another location among two locations including the first location and the second location and a direction extending from one location to another location among two locations including the third location and the fourth location are different.

When the direction in which the fiber member extends from one location to another location among two different locations of the joint surface is limited, there is a concern that a strength against a force applied in a direction orthogonal to the extending direction may be lower than a strength against a force applied in the extending direction. Accordingly, in the above-described configuration, by providing the two directions as the above-described extending direction, the joint strength can be further increased as compared to the extending direction is limited to one direction.

Solution 10. In the joint member according to any one of Solutions 1 to 9, a density at which the connection holes into which the fiber member is inserted are formed on the joint surface is higher in end portions of at least one of two members including the first member and the second member than in an inner portion surrounded by the end portions.

When the connection holes are provided in end portions of at least one of the first member and the second member, a joint strength with which the fiber member is inserted into the connection holes is likely to be higher as compared to when the connection holes are provided in the inner portion. Accordingly, in the above-described configuration, by increasing the density at which the connection holes are formed in the above-described end portions, a joint strength between the first member and the second member can be effectively increased.

In addition, in a connection body of the first member and the second member, peeling from an end portion is likely to occur. Therefore, by increasing the density at which the fiber member is inserted into the connection holes in the end portions, the occurrence of peeling can be suppressed. Therefore, in the above-described configuration, the joint strength between the first member and the second member can be effectively increased.

Solution 11. A method for manufacturing a joint member, includes: a step of forming a first member where a plurality of connection holes are formed; an insertion step of inserting a third member through the connection holes from one opening into another opening in two different openings among openings formed in a joint surface of the first member by the connection holes; and a joining step of interposing the third member between the first member and a second member to join the third member and the second member to each other, in which the second member contains a resin, the third member contains a resin member and a fiber member, the insertion step is a step of inserting the fiber member into the connection holes, and the joining step is a step of joining the second member to the resin member of the third member.

With the above-described method, by inserting the fiber member of the third member into the joining holes of the first member, the first member and the third member can be strongly connected to each other. The first member and the second member are joined through the third member. On the other hand, the second member contains a resin and is joined to the resin member of the third member. Therefore, the third member joined to the second member has a good affinity during joining to the second member. Therefore, even when it is difficult to strongly join the first member and the second member, a joint strength between the first member and the second member can be increased.

Solution 12. In the method for manufacturing a joint member according to Solution 11, in the joining step, a tension is applied from both sides of the fiber member to the fiber member.

In the above-described configuration, by applying a tension from both sides of the fiber member, formation of a gap between the third member and the first member can be suppressed.

Solution 13. In the method for manufacturing a joint member according to Solution 11, in the third member, both of a portion inserted into the connection holes and a portion joined to the second member are formed of a composite material containing the resin member and the fiber member, and the insertion step includes a step of heating a tape-like member functioning as the third member while stretching the tape-like member from both sides of the tape-like member.

In the above-described configuration, in the insertion step, by applying a tension from both sides of the tape-like member, formation of a gap between the third member and the first member can be suppressed.

## Claims

1. A joint member comprising a first member, a second member, and a third member,
wherein the first member and the second member are joined through the third member,
a plurality of connection holes are provided in a joint surface of the first member,
the connection holes are holes for connecting two different locations in the joint surface through an internal space of the first member,
the joint surface of the first member is a surface of the first member facing the second member,
the second member contains a resin,
the third member contains a resin member and a fiber member,
the fiber member is a member that is inserted into the connection holes and extends from one location to another location among the two locations, and
a resin containing the fiber member is in contact with the joint surface.

2. The joint member according to claim 1,
wherein in the third member, both of a portion inserted into the connection holes and a portion in contact with the joint surface are formed of a composite material containing the resin member and the fiber member, and
the second member is joined to the resin member of the third member.

3. The joint member according to claim 1,
wherein the second member is a composite material containing a fiber and a resin.

4. The joint member according to claim 1,
wherein the first member is a metal member.

5. The joint member according to claim 1,
wherein the connection holes are formed obliquely to a direction orthogonal to the joint surface between the first member and the second member.

6. The joint member according to claim 1,
wherein the connection holes that connect the two locations include a first hole and a second hole,
the first hole is a hole that is provided in one location among the two locations and penetrates the joint surface of the first member and a back surface of the joint surface,
the second hole is a hole that is provided in another location among the two locations and penetrates the joint surface of the first member and the back surface of the joint surface, and
the fiber member is disposed to extend from one hole to another hole among two holes including the first hole and the second hole across the facing surface.

7. The joint member according to claim 1,
wherein the connection holes that connect the two locations are holes that connect the two locations through the internal space of the first member without penetrating a back surface of the joint surface.

8. The joint member according to claim 6,
wherein the back surface of the joint surface of the first member with the second member is also a joint surface with the second member.

9. The joint member according to claim 1,
wherein the connection holes include a first direction connection hole and a second direction connection hole,
the first direction connection hole is a hole for connecting a first location and a second location that are different from each other in the joint surface of the first member,
the second direction connection hole is a hole for connecting a third location and a fourth location that are different from each other in the joint surface of the first member, and
a direction extending from one location to another location among two locations including the first location and the second location and a direction extending from one location to another location among two locations including the third location and the fourth location are different.

10. The joint member according to claim 1,
wherein a density at which the connection holes into which the fiber member is inserted are formed on the joint surface is higher in end portions of at least one of two members including the first member and the second member than in an inner portion surrounded by the end portions.

11. A method for manufacturing a joint member, comprising:
a step of forming a first member where a plurality of connection holes are formed;
an insertion step of inserting a third member through the connection holes from one opening into another opening in two different openings among openings formed in a joint surface of the first member by the connection holes; and
a joining step of interposing the third member between the first member and a second member to join the third member and the second member to each other,
wherein the second member contains a resin,
the third member contains a resin member and a fiber member,
the insertion step is a step of inserting the fiber member into the connection holes, and
the joining step is a step of joining the second member to the resin member of the third member.

12. The method for manufacturing a joint member according to claim 11,
wherein in the joining step, a tension is applied from both sides of the fiber member to the fiber member.

13. The method for manufacturing a joint member according to claim 11,
wherein in the third member, both of a portion inserted into the connection holes and a portion joined to the second member are formed of a composite material containing the resin member and the fiber member, and
the insertion step includes a step of heating a tape-like member functioning as the third member while stretching the tape-like member from both sides of the tape-like member.
